(19) Europäisches Patentamt
European Patent Office
Office européen des brevets

(11) Publication number: **0 226 453 B2**

(12) **NEW EUROPEAN PATENT SPECIFICATION**

(45) Date of publication of the new patent specification: **26.07.95**

(51) Int. Cl.[6]: **C08K 5/00**, C08L 23/02, //(C08K5/00,5:34,5:52,5:13,5:34)

(21) Application number: **86309610.3**

(22) Date of filing: **10.12.86**

(54) **Polyolefin composition.**

(30) Priority: **11.12.85 JP 278465/85**

(43) Date of publication of application: **24.06.87 Bulletin 87/26**

(45) Publication of the grant of the patent: **04.03.92 Bulletin 92/10**

(45) Mention of the opposition decision: **26.07.95 Bulletin 95/30**

(84) Designated Contracting States: **BE DE FR GB IT NL**

(56) References cited:
**FR-A- 2 514 016**
**US-A- 3 909 491**
**US-A- 4 025 486**
**US-A- 4 185 004**
**US-A- 4 206 111**
**US-A- 4 331 585**
**US-A- 4 403 053**
**US-A- 4 526 916**
**US-A- 4 619 958**

**Ullmann's Encyclopedia of Industrial Chemistry, VCH Verlagsgesellschaft mbH, 6940 Weinheim, Germany, 1985, Vol. A3, pages 102 - 104.**

(73) Proprietor: **SUMITOMO CHEMICAL COMPANY, LIMITED**
**Kitahama 4-chome 5-33**
**Chuo-ku**
**Osaka 541 (JP)**

(72) Inventor: **Fukui, Yoshiharu**
**1-13-36, Aobadai**
**Ichihara-shi**
**Chiba 299-01 (JP)**
Inventor: **Koyama, Teruhisa**
**8-16, Hoshigoecho**
**Niihama-shi**
**Ehime 792 (JP)**
Inventor: **Kuroda, Kazuhisa**
**3-19-8, Sakuradai**
**Ichihara-shi**
**Chiba 299-01 (JP)**

(74) Representative: **Myerscough, Philip Boyd et al**
**J.A.KEMP & CO.**
**14, South Square**
**Gray's Inn**
**London WC1R 5LX (GB)**

**EP 0 226 453 B2**

**Polymer Stabilization edited by W. Lincoln Hawkins, Wiley Interscience, 1972, pages 107 - 112.**

**GE Speciality Chemicals, Technical Paper 152, Cost Effective UV Stabilization by William E. Horn, jr., Houston, Texas, 27-28 Feb. 1984.**

## Description

This invention concerns a polyolefin composition having improved light stability. More specifically, it relates to a polyolefin composition blended with particular antioxidants and a light stabilizer.

Polyolefins are excellent in their mechanical properties and extremely useful as molding products, films, fibers and the likes, but they have a drawback of being easily degraded under the effect of ultra-violet rays as experienced in the case of using them outdoor. Accordingly, it has generally been known to blend compounds such as salicylic acid ester, benzophenone, benzotriazole, nickel chelate or hindered amine, respectively, alone or in combination as light stabilizers for suppressing the degradation due to ultra-violet rays (for instance, refer to Japanese Patent Laid-Open Nos. 113236/1983 and 219353/1984).

Recently, synthetic rubber, inorganic fillers, pigments and the like have often been added to polyolefins for improving the mechanical properties thereof, as well as improving the performance, appearance and the like of molding products thereof, in order to broaden the field of application of polyolefins. In addition, the demand for the light stability has become so severer that light stability at higher temperature as compared with the conventional case has become necessary.

Particularly, while the molding products prepared from the compositions incorporated with the fillers and the additives as described above have been used in such application uses that the light stability is required, the addition of the inorganic filler or the like tends to reduce the light stability and remarkably reduce the light stability at higher temperature. Accordingly, it has become apparent that no sufficient performance can be attained or maintained and no satisfactory result can be obtained by the mere use of various conventional light stabilizers as described above. A polyolefin composition has been desired in which the foregoing problems are dissolved, under the circumstances as described above.

After a long study, the present inventors have succeeded in providing a polyolefin composition having improved light stability at higher temperature by blending specific combination of antioxidants and light stabilizers with polyolefin.

Specifically, this invention provides a composition wherein a polyolefin is blended with a combination of (1) tris(3,5-di-t-butyl-4-hydroxy-benzyl)isocyanurate,(2) pentaerythritol diphosphite compound represented by the formula:

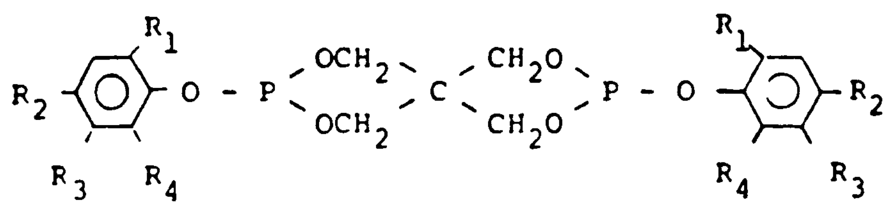

wherein $R_1$ represents a methyl group, a tertiary butyl group or a tertiary amyl group, $R_2$ represents a hydrogen atom, a methyl group, a tertiary butyl group, a tertiary amyl group, a phenyl group or a cyclohexyl group, $R_3$ represents a hydrogen atom, a methyl group or a tertiary butyl group, $R_4$ represents a hydrogen atom, a methyl group or a tertiary butyl group, provided that not all of $R_2$, $R_3$ and $R_4$ simultaneously represent hydrogen atoms, (3) a compound selected from phenyl benzoate compounds, benzotriazole compounds and benzophenone compounds, (4) heterocyclic hindered amine compounds and (5) optionally a thioester antioxidant in an amount not exceeding one third of the amount of the hindered heterocyclic amine compound (4).

Polyolefin for use in this invention is homopolymer of α-olefin such as ethylene, propylene, butene-1, hexene-1 or 4-methyl-pentene-1. Alternatively, it is random or block copolymer comprising two or more of such α-olefins as above, e.g., polyethylene, polypropylene, polybutene-1, polyisobutene, poly-3-methyl-butene-1, poly-4-methyl-pentene-1, ethylene-propylene copolymer, ethylene-butene-1 copolymer, propylene-4-methyl-pentene-1 copolymer, propylene-butene-1 copolymer, propylene-4-methyl-pentene-1 copolymer, decene-1- 4-methyl-pentene-1 copolymer, ethylene-propylene butene-1 copolymer, etc. In the case of copolymer, comomer may be multi-unsaturated compound such as conjugated or non-conjugated dienes or acrylic acid, methacylic acid, vinyl acetate or the like.

These polymers may further include modified ones with acid, for example, polymers graft-modified with α,β-unsaturated aliphatic acid, cycloaliphatic carboxylic acid or derivatives thereof and also include rubbery, fatty and waxy polymers.

Furthermore, in this invention, a mixture obtained by adding synthetic rubber and an inorganic filler to these polyolefins may also be used depending on the application uses. Preferred synthetic rubber usable in this invention is ethylene-α-olefin copolymer rubber, e.g., copolymer rubbers of ethylene and α-olefin, for example, propylene, butene-1 or hexene-1; or ternary copolymer rubber (hereinafter referred to as EPDM) in which non-conjugated dienes, for example, ethylidene norbornene or cyclopentadiene is copolymerized as the third ingredient with the ethylene-propylene copolyer. Among them, ethylene-propylene copolymer rubber and EPDM are most preferred.

Inorganic fillers usable in this invention include, for example, talc, mica, wollastonite, calcium carbonate, barium sulfate, magnesium carbonate, clay, alumina, silica, calcium sulfate, carbon fibers, glass fibers, metal fibers, silica sand, silicic rock, carbon black, titanium oxide, magnesium hydroxide, asbestos, zeolite, molybdenum, diatomaceous earth, sericite, white sand, microballoon, calcium hydroxide, calcium sulfite, sodium sulfate, bentonite and graphite. Among them, talc, mica, calcium carbonate, glass fibers, wollastonite and the like are preferred for improving impact strength at low temperature, moldability and paintability.

Particularly, in order to obtain a polyolefin composition having improved impact strength at low temperature, moldability and paintability, it is preferred to mix from 25 to 90 % by weight of crystalline polyolefin, from 5 to 35 % by weight of ethylene-α-olefin copolymer rubber and from 5 to 40 % by weight of an inorganic filler.

Antioxidants for use in this invention are tris(3,5-di-t-butyl-4-hydroxybenzyl)isocyanurate (hereinafter referred to as "compound (I)") and a pentaerythritol diphosphite compound (hereinafter referred to as "compound (II)") represented by the formula:

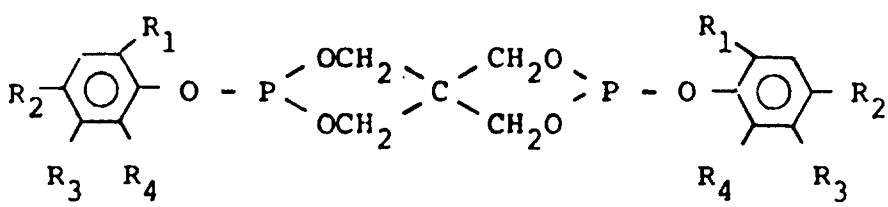

where $R_1$ represents a methyl group, a tertiary butyl group or a tertiary amyl group, $R_2$ represents a hydrogen atom, a methyl group, a tertiary butyl group, a tertiary amyl group, a phenyl group or a cyclohexyl group, $R_3$ represents a hydrogen atom, a methyl group or a tertiary butyl group and $R_4$ represents a hydrogen atom, a methyl group or a tertiary butyl group, providing that not all of $R_2$, $R_3$ and $R_4$ simultaneously represent hydrogen atoms.

Examples of the compound (II) are,
bis(2,4-di-t-butylphenyl)pentaerythritol diphosphite,
bis(2,6-di-t-butyl-4-methylphenyl)pentaerythritol diphosphite,
bis(4-methyl-2-t-butylphenyl)pentaerythritol diphosphite,
bis(3-methyl-4,6-di-t-butylphenyl)pentaerythritol diphosphite,
bis(3-methyl-6-t-butylphenyl)pentaerythritol diphosphite,
bis(2-methyl-6-t-butylphenyl)pentaerythritol diphosphite and
bis(2,6-dimethylphenyl)pentaerythritol diphosphite.

These compounds are added in such amounts as from 0.01 to 1.0 part by weight, preferably, from 0.05 to 0.5 part by weight, of compound (I) and from 0.01 to 0.5 part by weight, more preferably, from 0.05 to 0.3 part by weight of compound (II), based on 100 parts by weight of the polyolefin as described above.

Light stabilizers used in this invention are one of the three compounds [(III)-(V)] hereinbelow defined and heterocyclic hindered amine compounds (hereinafter referred to as "compound (VI)"). The three compounds mentioned above are phenyl benzoate compounds (hereinafter referred to as "compound (III)"), benzotriazole compounds (hereinafter referred to as "compound (IV)") and benzophenone compounds (hereinafter referred to as "compound (V)"). Among all, combined use of the compound (III) and the compound (VI) is particularly preferred.

Examples of the compound (III) are phenyl salycilate, p-butylphenyl salycilate, p-octylphenyl salycilate, resorsinol monobenzoate, 2,4-di-t-butyl-phenyl-3,5-di-t-butyl-4-hydroxy benzoate, 4-octyl-phenyl-3,5-di-t-butyl-4-hydroxybenzoate and so on. Particularly, 2,4-di-t-butyl-phenyl-3,5-di-t-butyl-4-hydroxybenzoate is is preferred.

Examples of the compound (IV) are,
2-(2'-hydroxy-5'-methylphenyl)benzotriazole,
2-(2'-hydroxy-5'-t-butylphenyl)benzotriazole,
2-(2'-hydroxy-5'-amylphenyl)benzotriazole,
2-(2'-hydroxy-4'-octoxyphenyl)benzotriazole,
2-(2'-hydroxy-3',5'-di-t-butylphenyl)benzotriazole,
2-(2'-hydroxy-3'-5'-di-isoamylphenyl)benzotriazole,
2-(2'-hydroxy-3'-5'-di-methylphenyl)benzotriazole,
2-(2'-hydroxy-3'-t-butyl-5'-methylphenyl)-5-chlorobenzotriazole,
2-(2'-hydroxy-3'-5'-di-t-butylphenyl)-5-chlorobenzotriazole,
2-(2'-hydroxy-3',5'-dimethylphenyl)-5-chlorobenzotriazole,
and 2-(2'-hydroxy-3',5'-dichlorophenyl)benzotriazole.

Examples of the compound (V) are,
2-hydroxy-4-methoxybenzophenone,
2-hydroxy-4-octoxybenzophenone,
2-hydroxy-4-stearyloxybenzophenone,
2-hydroxy-4-dodecyloxybenzophenone,
2-hydroxy-4-methoxy-benzopnenone-5-sulfonic acid,
2-hydroxy-4-methoxy-4'-methylbenzophenone,
2-hydroxy-4-benzoyloxybenzophenone,
5-chloro-2-hydroxybenzophenone,
2,4-dihydroxybenzophenone,
2,2'-dihydroxy-4-methoxybenzophenone,
2,2'-dihydroxy-4,4'-dimethoxybenzophenone, and
2,2'-dihydroxy-4-n-octoxybenzophenone.

The compound (VI) is 6-membered hetero-cyclic ring-containing hindered amine nitrogen atom with or without other hetero atoms, preferably nitrogen or oxygen.

Specific Examples are
bis-(2,2,6,6,-tetramethyl-4-piperidyl)sebacate,
4-benzoyloxy-2,2,6,6,-tetramethylpiperidine,
polycondensate of succinic acid and N-(2-hydroxyethyl)-2,2,6,6-tetramethyl-4-hydroxypiperidine,
1,2,3,4-tetra(2,2,6,6-tetramethyl-4-piperidyl)-butane tetracarboxylate,
1,4-di-(2,2,6,6-tetramethyl-4-piperidyl)-2,3-butanedione,
tris-(2,2,6,6-tetramethyl-4-piperidyl)trimellitate,
1,2,2,6,6-pentamethyl-4-piperidyl-stearate,
1,2,2,6,6-pentamethyl-4-piperidyl-n-octoate.
bis-(1,2,2,6,6-pentamethyl-4-piperidyl)sebacate,
tris-(2,2,6,6-tetramethyl-4-piperidyl)-nitrile acetate,
4-hydroxy-2,2,6,6-tetramethylpiperidine,
4-hydroxy-1,2,2,6,6-pentamethylpiperidine,
poly[(6-morpholino-S-triazine-2,4-diyl)[(2,2,6,6-tetramethyl-4-piperidyl)imino]-hexamethylene[(2,2,6,6-tetramethyl-4-piperidyl)imino]],
poly[[6-(1,1,3,3-tetramethylbutyl)amino-1,3,5-triazine-2,4-diyl][2,2,6,6-tetramethyl-4-piperidyl)imino]hexa methylene[(2,2,6,6-tetramethyl-4-piperidyl)amino]], polycondensate of N,N'-bis(2,2,6,6-tetramethyl-4-piperidyl)hexamethylenediamine and 1,2-dibromoethane.

Amounts of one of the compounds (III) - (V) and (VI) to be added are from 0.01 to 1.0 part by weight, preferably, from 0.05 to 0.5 part by weight, each based on 100 parts by weight of polyolefin.

Furthermore, in order to improve the outer looking and appearance of molded products, various pigments may be added for coloration to the composition. Any organic and inorganic pigments suitable to polyolefins may be used to this effect. For instance, mention may be made; titanium oxide, carbon black, yellow iron oxide, titanium yellow, hansa yellow, benzine yellow, red oxide, permanent red, thioindigo red, thioindigo maroon, manganese purple, dioxadine violet, purussian blue, phthalocyanine blue, phthalocyanine green, isoindolinone yellow, quinophthalone yellow, condensated azo yellow, perinone orange, quinacridone red, quinacridone scarlet, perylene scarlet condensated azo red, dioxadine violet, indanthrone blue, cinquacia red, carbon black and titanium oxide. As the dispersant for the pigment, metal soaps such as calcium stearate and magnesium stearate, polyethylene wax, polypropylene wax and the like may be used. Polyolefin wax is preferably premixed with the pigment in a powder ball mill in order to improve the dispersing effect thereof.

The composition of the present invention may contain other additives, for example, process oils, stabilizers, lubricants, slip additives, nucleating agents, antistatic agents, releasing agents and anti-mould agents, so long as they do not make any harm to the property thereof.

Other antioxidants than those used in the composition according to this invention may also be added so long as they do not give any unfavorable influence to the property of the composition. However, since thioester antioxidants, for example, dilauryl-thio-dipropionate, dimyristyl-thio-dipropionate or distearyl-thio-dipropionate, remarkably injure the light stability, they had to be added in an amount not more than 1/3 as much as the heterocyclic hindered amine compound.

The composition according to this invention is obtained by kneading in a heat-molten state by using an ordinary kneader such as a uniaxial extruder, a biaxial extruder, a banbury mixer roll, a brabender and a kneader.

The products obtained from the polyolefin composition according to this invention as described above have extremely excellent light stability even at high temperature.

This invention will further be explained referring to examples.

The test method for the light stability in the examples is as described below. The evaluation for the light stability is made on the basis of the time when abnormality is seen in appearance such as crackings on the surface of test specimens.

Test Method for Light Stability:

The accelerated weathering test was carried out by using a Sunshine Super Long Life Weatherometer (model : WEL-SUN-DC) manufactured by Suga Tester K.K. The test conditions are shown below:

| | |
|---|---|
| (1) Size of test specimen | 70 mm x 25 mm x 3 mm (t) |
| (2) Black panel temperature | 83° C |
| (3) Spray/dry cycle | 18 min/120 min |
| (4) Humidity in a tester vessel | 50 %RH |
| (5) Observation for the external abnormality such as crackings | microscopic observation (x 50) |

Example 1

To 100 parts by weight of powder of crystalline ethylene - propylene block copolymer (ethylene content : 7.2 wt%, melt index : 3.0 g/10 min) were added 0.05 part by weight of calcium stearate, 0.1 part by weight of tris(3,5-di-t-butyl-4-hydroxybenzyl) isocyanurate and 0.05 part by weight of bis-(2,4-di-t-butylphenyl)-pentaerylthritol diphosphite as antioxidants, 0.1 part by weight of 2-(2'-hydroxy-3'-t-butyl-5'-methylphenyl)-5-chlorobenzotriazole and 0.1 part by weight of bis-(2,2,6,6-tetramethyl-4-piperidyl)sebacate as light stabilizers, mixed in a Henchel mixer and then extruded through a 40 mm$\phi$ extruder at 230°C under a nitrogen atmosphere to prepare pellets.

The pellets were pre-heated at 230°C for 10 minutes to prepare a pressed sheet of 3 mm thick. A specimen sized 70 mm x 25 mm was cut out from the sheet and subjected to the accelerated weathering test by using the Sunshine Weatherometer. The time at which crackings were resulted on the surface of the test specimen is shown in Table 1.

Example 2

The same procedures as in Example 1 were carried out excepting for adding 2,4-di-t-butylphenyl-3,5-di-t-butyl-4-hydroxybenzoate instead of 2(2'-hydroxy-3'-t-butyl-5'-methylphenyl)-5-chlorobenzotriazole as the light stabilizer. The time at which crackings were resulted is shown in Table 1.

Example 3

The same procedures as in Example 1 were carried out excepting for adding 2-hydroxy-4-octoxy benzophenone instead of 2(2'-hydroxy-3'-t-butyl-5'-methylphenyl)-5-chlorobenzotriazole as the light stabilizer. The time at which crackings were resulted is shown in Table 1.

Example 4

The same procedures as in Example 1 were carried out excepting for adding poly[[6-(1,1,3,3-tetramethylbutyl)amino-1,3,5-triazine-2,4-diyl)[2,2, 6,6-tetramethyl-4-piperidyl)imino]hexamethylene[(2,2, 6,6-tetramethyl-4-piperidyl)amino]] instead of bis(2, 2,6,6-tetramethyl-4-piperidyl)sebacate as the light stabilizer. The time at which crackings were resulted is shown in Table 1.

Comparative Example 1

The same procedures as in Example 1 were carried out excepting for adding pentaerythrytyltetrakis[3-(3,5-di-t-butyl-4-hydroxyphenyl)propionate] instead of tris(3,5-di-t-butyl-4-hydroxybenzyl)isocyanurate as the antioxidant. The time at which crackings were resulted is shown in Table 1.

Comparative Example 2

The same procedures as in Example 1 were carried out excepting for excluding bis(2,4-di-t-butyl-phenyl)pentaerythritol diphosphite as the antioxidant. The time at which crackings were resulted is shown in Table 1.

Comparative Example 3

The same procedures as in Example 1 were carried out excepting for adding tris(2,4-di-t-butylphenyl)-phosphite instead of bis(2,4-di-t-butylphenyl) pentaerythritol diphosphite as the antioxidant. The time at which the crackings were resulted is shown in Table 1.

Comparative Example 4

The procedures as in Example 1 were carried out excepting for excluding 2(2'-hydroxy-3'-t-butyl-5'-methylphenyl)-5-chlorobenzotriazole as the light stabilizer. The time at which crackings were resulted is shown in Table 1.

Comparative Example 5

The procedures as in Example 1 were carried out excepting for excluding bis-(2,2,6,6-tetramethyl-4-piperidyl)sebacate as the light stabilizer. The time at which crackings were resulted is shown in Table 1.

Comparative Example 6

The same procedures as in Example 1 were carried out excepting for additionally adding 0.1 part by weight of dimyristyl-thio-dipropionate as the antioxidant. The time at which crackings were resulted is shown in Table 1.

Comparative Example 7

The same procedures as in Example 4 were carried out excepting for adding pentaerythrityl-tetrakis-[3-(3,5-di-t-butyl-4-hydroxyphenyl)propionate] instead of tris(3,5-di-t-butyl-4-hydroxybenzyl)isocyanurate as the antioxidant. The time at which crackings were resulted shown in Table 1.

Table 1

| | Antioxidant (parts by weight)* | | | | | Light stabilizer (parts by weight)* | | | | | Crack resulting time |
|---|---|---|---|---|---|---|---|---|---|---|---|
| | A-1 | A-2 | A-3 | A-4 | A-5 | B-1 | B-2 | B-3 | B-4 | B-5 | (Hrs) |
| Example 1 | 0.1 | - | 0.05 | - | - | 0.1 | - | - | 0.1 | - | 2180 |
| " 2 | 0.1 | - | 0.05 | - | - | - | 0.1 | - | 0.1 | - | 2650 |
| " 3 | 0.1 | - | 0.05 | - | - | - | - | 0.1 | 0.1 | - | 2310 |
| " 4 | 0.1 | - | 0.05 | - | - | 0.1 | - | - | - | 0.1 | 1760 |
| Comparative Example 1 | - | 0.1 | 0.05 | - | - | 0.1 | - | - | 0.1 | - | 1550 |
| " 2 | 0.1 | - | - | - | - | 0.1 | - | - | 0.1 | - | 1380 |
| " 3 | 0.1 | - | - | 0.05 | - | 0.1 | - | - | 0.1 | - | 1400 |
| " 4 | 0.1 | - | 0.05 | - | - | - | - | - | 0.1 | - | 880 |
| " 5 | 0.1 | - | 0.05 | - | - | 0.1 | - | - | - | - | 350 |
| " 6 | 0.1 | - | 0.05 | - | 0.1 | 0.1 | - | - | 0.1 | - | 1600 |
| " 7 | - | 0.1 | 0.05 | - | - | 0.1 | - | - | - | 0.1 | 1210 |

Common ingredient : 0.05 part by weight of calcium stearate

Note *

A-1 : tris(3,5-di-t-butyl-4-hydroxybenzyl)isocyanurate

A-2 : pentaerythrityl-tetrakis[3-(3,5-di-t-butyl-4-hydroxyphenyl)propionate]

A-3 : bis(2,4-di-t-butylphenyl)-pentaerythritol diphosphite

A-4 : tris(2,4-di-t-butylphenyl)phosphite

A-5 : dimyristyl-thio-dipropionate

B-1 : 2(2'-hydroxy-3'-t-butyl-5'-methylphenyl)-5-chlorobenzotriazole

B-2 : 2,4-di-t-butylphenyl-3,5-di-t-butyl-4-hydroxy-benzoate

B-3 : 2-hydroxy-4-octoxy benzophenone

B-4 : bis(2,2,6,6-tetramethyl-4-piperidyl)sebacate

B-5 : poly[[6-(1,1,3,3-tetramethylbutyl)amino-1,3,5-triazine-2,4-diyl][2,2,6,6-tetramethyl-4-piperidyl)imino]hexamethylene[(2,2,6,6-tetra-methyl-4-piperidyl)amino]

Example 5

To 100 parts by weight of a mixture comprising 70 % by weight of powder of a crystalline ethylene - propylene block copolymer (ethylene content : 7.2 wt%, melt index : 15.0 g/10 min), 20 % by weight of EPDM (ethylene content : 50 wt%, Mooney viscosity : 45) and 10 % by weight of talc (average particle size : 2.7 $\mu$), were added 0.05 part by weight of calcium stearate, 0.2 part by weight of tris(3,5-di-t-butyl-4-hydroxybenzyl)isocyanurate and 0.1 part by weight of bis(2,4-di-t-butylphenyl) pentaerythritol diphosphite as the antioxidant, 0.3 part by weight of 2(2'-hydroxy-3'-t-butyl-5'-methylphenyl)-5-chlorobenzotriazole and 0.3 part by weight of bis(2,2,6,6-tetramethyl-4-piperidyl)sebacate as the light stabilizer and, further, 1.5 parts by weight of carbon black and polyethylene wax previously mixed at a ratio of 4 : 6 by weight as a pigment. The mixture was melt-kneaded in a Banbury mixer for 10 minutes at 180° C. Then, the mixture was cooled to solidify into a sheet of 5 mm thick by rolls and then cut into pellets. The thus obtained pellets were shaped into a flat plate of 3 mm thick under injecting molding conditions, i.e., injection molding pressure of 60 kg/cm$^2$G, molding temperature of 230°C and die temperature of 50°C. A specimen sized 70 mm x 25 mm was cut out from the flat plate and subjected to accelerated weathering test in the Shunshine Weatherometer. The time at which crackings were resulted to the surface of specimen is shown in Table 2.

Example 6

The same procedures as in Example 5 were carried out excepting for adding 2,4-di-t-butylphenyl-3,5-di-t-butyl-4-hydroxybenzoate instead of 2(2'-hydroxy-3'-t-butyl-5'- methylphenyl)-5-chlorobenzotriazole as the light stabilizer. The time at which crackings were resulted is shown in Table 2.

Example 7

The same procedures as in Example 5 were carried out excepting for adding poly[[6-(1,1,3,3-tetramethylbutyl)amino-1,3,5-triazine-2,4-diyl][2,2, 6,6-tetramethyl-4-piperidyl)imino]hexamethylene[(2,2, 6,6-tetramethyl-4-piperidyl)amino]] instead of bis(2,2,6,6-tetramethyl-4-piperidyl)sebacate as the light stabilizer. The time at which the crackings were resulted is shown in Table 2.

Comparative Example 8

The same procedures as in Example 5 were carried out excepting for adding pentaerythrityl-tetrakis[3-(3,5-di-t-butyl-4-hydroxyphenyl)propionate] instead of tris(3,5-di-t-butyl-4-hydroxybenzyl)isocyanurate as the antioxidant. The time of resulting in the crackings is shown in Table 2.

Comparative Example 9

The same procedures as in Example 5 were carried out excepting for excluding bis(2,4-di-t-butyl-phenyl)pentaerythritol diphosphite as the antioxidant. The time at which crackings were resulted is shown in Table 2.

Comparative Example 10

The same procedures as in Example 5 were carried out excepting for adding tris(2,4-di-t-butylphenyl)-phosphite instead of bis(2,4-di-t-butylphenyl) pentaerythritol diphosphite as the antioxidant. The time at which the crackings were resulted is shown in Table 2.

Comparative Example 11

The same procedures as in Example 5 were carried out excepting for additionally adding 0.1 part by weight of dimyristyl-thio-dipropionate as the antioxidant. The time at which crackings were resulted is shown in Table 2.

Comparative Example 12

The same procedures as in Example 7 were carried out excepting for adding pentaerythrityl-tetrakis[3-(3,5-di-t-butyl-4-hydroxyphenyl)-propionate] instead of tris(3,5-di-t-butyl-4-hydroxybenzyl)isocyanurate as the antioxidant. The time at which crackings were resulted is shown in Table 2.

Table 2

| | Antioxidant (parts by weight)* | | | | | Light stabilizer (parts by weight)* | | | | Crack resulting time (Hrs) |
|---|---|---|---|---|---|---|---|---|---|---|
| | A-1 | A-2 | A-3 | A-4 | A-5 | B-1 | B-3 | B-4 | B-5 | |
| Example 5 | 0.2 | - | 0.1 | - | - | 0.3 | - | 0.3 | - | 2620 |
| ″ 6 | 0.2 | - | 0.1 | - | - | - | 0.3 | 0.3 | - | 2700 |
| ″ 7 | 0.2 | - | 0.1 | - | - | 0.3 | - | - | 0.3 | 2440 |
| Comparative Example 8 | - | 0.2 | 0.1 | - | - | 0.3 | - | 0.3 | - | 1870 |
| ″ 9 | 0.2 | - | - | - | - | 0.3 | - | 0.3 | - | 2020 |
| ″ 10 | 0.2 | - | - | 0.1 | - | 0.3 | - | 0.3 | - | 2020 |
| ″ 11 | 0.2 | - | - | - | 0.1 | 0.3 | - | 0.3 | - | 1600 |
| ″ 12 | - | 0.2 | 0.1 | - | - | 0.3 | - | - | 0.3 | 1500 |

Common ingredients : Calcium stearate 0.05 part by weight
Pigment (carbon black/polyethylene wax = 4/6) 1.5 parts by weight

* Same as in Table 1.

It has been apparent from the above that extremely excellent light stability is attained by specifying the combination of the antioxidant and the light stabilizer to be blended with polyolefin.

## Claims

1. A polyolefin composition comprising a blend of 100 parts by weight of a polyolefin and (1) from 0.01 to 1.0 part by weight of tris(3,5-di-t-butyl-4-hydroxybenzyl)isocyanurate,(2) from 0.01 to 0.5 part by weight

of a pentaerythritol diphosphite compound of the formula:

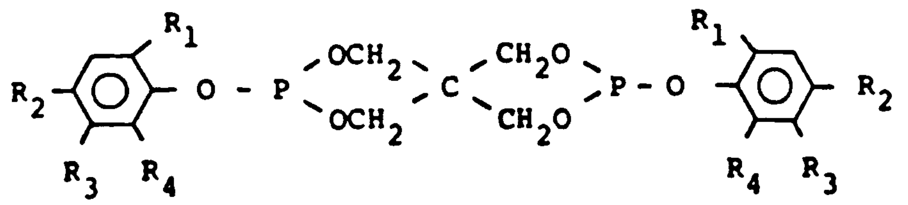

where $R_1$ represents methyl, tertiary butyl or tertiary amyl, $R_2$ represents hydrogen, methyl, tertiary butyl, tertiary amyl, phenyl or cyclohexyl, $R_3$ represents hydrogen, methyl or tertiary butyl and $R_4$ represents hydrogen, methyl or tertiary butyl, provided that not all of $R_2$, $R_3$ and $R_4$ simultaneously represent hydrogen, (3) from 0.01 to 1.0 part by weight of at least one compound selected from phenyl benzoate compounds, benzotriazole compounds and benzophenone compounds, (4) from 0.01 to 1.0 part by weight of a heterocyclic hindered amine compound and (5) optionally a thioester antioxidant in an amount not exceeding one third of the amount of the hindered heterocyclic amine compound (4).

**2.** A polyolefin composition according to claim 1 comprising 0.05 - 0.5 part by weight of component (1), 0.05 - 0.3 part by weight of component (2) and 0.05 - 0.5 part by weight of each of components (3) and (4).

**3.** A polyolefin composition according to claim 1 or 2 which contains 25 - 90 % by weight of crystalline polyolefin, 5 - 35 % by weight of ethylene-$\alpha$-olefin copolymer rubber and 5 - 40 % by weight of inorganic fillers.

**4.** A polyolefin composition according to claim 1, 2 or 3 wherein component (3) is 2,4-di-t-butyl-phenyl-3,5-di-t-butyl-4-hydroxybenzoate.

**5.** Shaped articles of a composition as claimed in any one of the preceding claims.

**Patentansprüche**

**1.** Polyolefin-Zubereitung, umfassend ein Gemisch aus 100 Gewichtsteilen eines Polyolefins und (1) 0,01 bis 1,0 Gewichtsteilen Tris-(3,5-di-t-butyl-4-hydroxybenzyl-)isocyanurat; (2) 0,01 bis 0,5 Gewichtsteilen einer Pentaerythritoldiphosphit-Verbindung der Formel

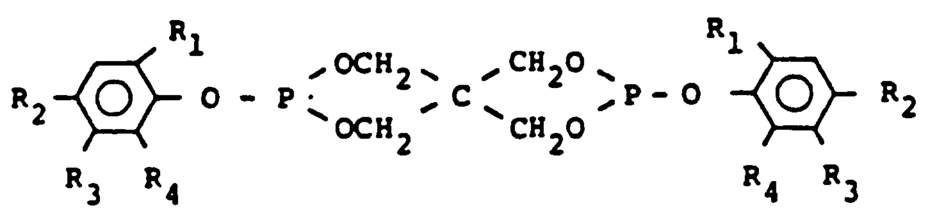

worin $R_1$ für Methyl, tert.-Butyl oder tert.-Amyl steht, $R_2$ für Wasserstoff, Methyl, tert.-Butyl, tert.-Amyl, Phenyl oder Cyclohexyl steht, $R_3$ für Wasserstoff, Methyl oder tert.-Butyl steht und $R_4$ für Wasserstoff, Methyl oder tert.-Butyl steht, mit der Maßgabe, daß nicht alle Reste $R_2$, $R_3$ und $R_4$ gleichzeitig für Wasserstoff stehen; (3) 0,01 bis 1,0 Gewichtsteilen wenigstens einer Verbindung, die gewählt ist aus Phenylbenzoat-Verbindungen, Benzotriazol-Verbindungen und Benzophenon-Verbindungen; (4) 0,01 bis 1,0 Gewichtsteilen einer heterocyclischen, sterisch gehinderten Amin-Verbindung; und (5) gegebenenfalls eines Thioester-Oxidationsinhibitors in einer Menge, die ein Drittel der Menge der heterocyclischen, sterisch gehinderten Amin-Verbindung (4) nicht übersteigt.

**2.** Polyolefin-Zubereitung nach Anspruch 1, umfassend 0,05 bis 0,5 Gewichtsteile der Komponente (1), 0,05 bis 0,3 Gewichtsteile der Komponente (2) und 0,05 bis 0,5 Gewichtsteile jeder der Komponenten (3) und (4).

3. Polyolefin-Zubereitung nach Anspruch 1 oder 2, welche 25 bis 90 Gewichtsprozent eines kristallinen Polyolefins, 5 bis 35 Gewichtsprozent eines Ethylen-α-Olefin-Copolymer-Kautschuks und 5 bis 40 Gewichtsprozent anorganischer Füllstoffe umfaßt.

4. Polyolefin-Zubereitung nach Anspruch 1, 2 oder 3, worin Komponente (3) die Verbindung 2,4-Di-tert.-butyl-phenyl-3,5-di-tert.-butyl-4-hydroxybenzoat ist.

5. Formkörper aus einer Zubereitung nach einem der vorangehenden Ansprüche.

**Revendications**

1. Composition à base de polyoléfine, comprenant un mélange de 100 parties en poids d'une polyoléfine et (1) de 0,01 à 1,0 partie en poids d'isocyanurate de tris(3,5-di-t-butyl-4-hydroxybenzyle), (2) de 0,01 à 0,5 partie en poids d'un diphosphite de pentaérythrite de formule :

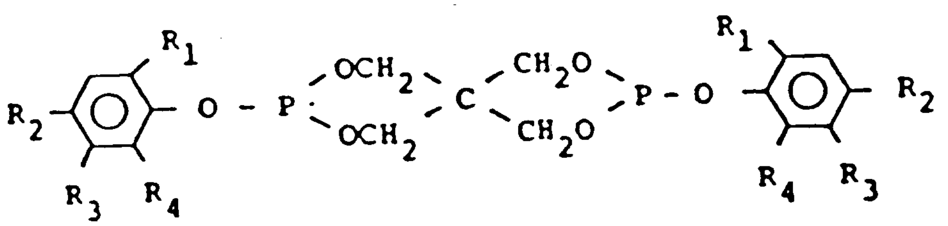

dans laquelle $R_1$ est méthyle, butyle tertiaire ou amyle tertiaire, $R_2$ est hydrogène, méthyle, butyle tertiaire, amyle tertiaire, phényle ou cyclohexyle, $R_3$ est hydrogène, méthyle ou butyle tertiaire et $R_4$ hydrogène, méthyle ou butyle tertiaire, pourvu que $R_2$, $R_3$ et $R_4$ ne soient pas tous simultanément de l'hydrogène, (3) de 0,01 à 1,0 partie en poids d'au moins un composé choisi parmi les benzoates de phényle, les benzotriazoles et les benzophénones, (4) de 0,01 à 1,0 partie en poids d'une amine hétérocyclique à empêchement stérique et, éventuellement (5) d'un antioxydant à base de thioesters en une quantité n'excédant pas un tiers de la quantité de l'amine (4) hétérocyclique à empêchement stérique.

2. Composition à base de polyoléfine suivant la revendication 1, comprenant de 0,05 à 0,5 partie en poids du constituant (1), de 0,05 à 0,3 partie en poids du constituant (2), et de 0,05 à 0,5 partie en poids de chacun des constituants (3) et (4).

3. Composition à base de polyoléfine suivant la revendication 1 ou 2, qui contient de 25 à 90 % en poids d'une polyoléfine cristalline, de 5 à 35 % en poids d'un caoutchouc en copolymère d'éthylène et d'α-oléfine et de 5 à 40 % en poids de charges minérales.

4. Composition à base de polyoléfine, suivant la revendication 1, 2 ou 3, dans laquelle le constituant (3) est le 3,5-di-t-butyl-4-hydroxybenzoate de 2,4-di-t-butyl-phényle.

5. Objets moulés en une composition telle que revendiquée à l'une quelconque des revendications précédentes.